# EUROPEAN PATENT APPLICATION

(11) **EP 4 613 712 A1**
(43) Date of publication of application: **10.09.2025**
(21) Application number: 23897138.6
(22) Date of filing: 09.08.2023
(51) Int. Cl.: C01F 5/02, C01F 5/14, C01F 5/28

(54) **CORE-SHELL PARTICLES, METHOD FOR PRODUCING SAME, AND METHOD FOR PRODUCING HOLLOW PARTICLES**

(30) Priority: 01.12.2022 JP 2022192644
(71) Applicant: Morita Chemical Industries Co., Ltd., Osaka-shi, Osaka 541-0056 (JP)
(72) Inventor: SATO, Keisuke, Osaka-shi, Osaka 532-0002 (JP); HATTORI, Shinichi, Osaka-shi, Osaka 532-0002 (JP)
(74) Representative: TBK
(86) International application number: PCT/JP2023/029092
(87) International publication number: WO 2024/116478

(57) **Abstract**

The objective of the present invention is to provide a method for producing a core-shell particle without requiring the synthesis of a core particle and the adjustment of the electric charge of the surface of the core particle, and to provide a method for producing a hollow particle without requiring thermal energy in a hollowing step of the core-shell particles. The method for producing the core-shell particle according to the present invention includes a step for forming a shell by directly fluorinating the surface layer of a core particle consisting of a magnesium inorganic salt. Next, the method for producing a hollow particle of a fluoride includes a step for removing only the core particle with an acid from the core-shell particle obtained by the above-mentioned producing method.

## Description

### TECHNICAL FIELD

The present invention relates to a core-shell particle including a core particle of a magnesium inorganic salt and a shell of magnesium fluoride formed on the surface layer of the core particle, and a method for producing the same. The present invention also relates to a method for producing a hollow particle including a step for removing the core particle of the core-shell particle with an acid.

### BACKGROUND ART

An antireflection film is used on a surface of a display of a personal computer, a smartphone, or the like. Further, the surface of an optical element such as a camera lens is also coated with an antireflection film. It is known that silica, magnesium fluoride, silicone resin, and the like are used as materials used for the outermost layer of these antireflection films because the materials are required to have a low refractive index and to be transparent.

Further, an antireflection film utilizing the refractive index of air of 1.0 is known in order to suppress the reflectance to a low level. Further, a method of producing a material having a lower refractive index by forming voids in a layer of silica or magnesium fluoride is also known.

As a prior art relating to the above, and a method for producing a core-shell particle having a high shell strength and a hollow particle obtained from the core-shell particle is known (see Patent Document 1). This is a method of forming a shell consisting of magnesium fluoride as a continuous layer on the surface layer of a polyvinyl polymer as a core particle.

Further, a method for producing a core-shell particle in which a polystyrene polymer is used as a core particle and a shell consisting of magnesium fluoride is formed on the surface layer of the core particle, and a hollow particle, is known, in which the particle diameter and the surface shape of the obtained particle can be controlled (see Patent Document 2). In this method, the particle diameter and surface shape of the obtained particle are controlled by controlling the concentration of the styrene monomer, the temperature during the reaction, and the like when the polystyrene polymer of the core particles is synthesized.

### PRIOR ART DOCUMENT

### PATENT DOCUMENT

Patent Document 1: JP Patent Application Laid-Open No. 2014-19626
Patent Document 2: JP Patent Application Laid-Open No. 2015-14325

### SUMMARY OF THE INVENTION

### PROBLEMS TO BE SOLVED BY THE INVENTION

However, in the producing methods of Patent Documents 1 and 2, since a polyvinyl polymer, a polystyrene polymer, or the like is used as the core particle, it is necessary to synthesize the core particle from the beginning. Therefore, an organic solvent, monomer, polymerization initiator, and the like are required in the process of synthesizing the core particle.

In order to form a shell consisting of magnesium fluoride on the surface of the core particle consisting of the synthetic resin, it is necessary to appropriately adjust the zeta potential of the surface of the core particle by a method of modifying the surface of the core particle with a functional group. Further, in order to obtain a core-shell particle by forming a continuous shell layer of magnesium fluoride having high strength on the surface of the core particle, it is necessary to form a shell layer of magnesium fluoride by changing reaction conditions such as temperature to promote growth of crystal nuclei on the surface of the core particle after the step of adhering crystal nuclei composed of fluorine and magnesium to the surface of the core particle under limited temperature conditions.

In addition, in order to obtain a hollow particle from the core-shell particle obtained by the above-mentioned method, a step of heating the core-shell particle under a high temperature condition of 200 °C or more to remove the core particle is required.

As described above, in the producing methods of Patent Documents 1 and 2, the steps and reaction conditions for producing the core-shell particle and the hollow particle are diversified. Therefore, a series of manufacturing processes is complicated. This is not preferable from the viewpoint of industrial utilization in view of securing of production facilities, production efficiency, and economic efficiency.

The objective of the present invention is to provide a core-shell particle which can be obtained by a smaller number of processes than conventional methods without requiring a core particle synthesis step, charge adjustment by surface modification of the core particle, and,thermal energy in a hollowing step for obtaining a hollow particle of a fluoride from the core-shell particle or the like, and to provide a method for producing the core-shell particle and a method for producing the hollow particle of the fluoride.

### MEANS FOR SOLVING THE PROBLEM

A method for producing a core-shell particle according to the first aspect of the present invention includes a shell formation step. In the shell formation step, a shell consisting of magnesium fluoride is formed on the surface layer of the core particle consisting of a magnesium inorganic salt.

According to the method for producing the core-shell particle of the present aspect, it is not necessary to synthesize a core particle from the beginning as in the conventional method. Therefore, the core-shell particle can be produced without using the synthesis step of the core particles, and the facilities, chemical substances, solvents, and the like related to the step. In addition, unlike the conventional method in which a polyvinyl polymer or a polystyrene polymer is used as the core particle, in the producing method according to the present aspect, the shell layer consisting of magnesium fluoride can be formed by directly reacting the surface layer of the magnesium inorganic salt to be the core particle with the fluorinating agent. Therefore, it is not necessary to modify the surface of the core particle with a functional group or to control the zeta potential of the surface of the core particle, and thus the core-shell particle can be produced. Therefore, as compared with the conventional method, simplification of process management, reduction in manufacturing cost, and improvement in manufacturing efficiency can be realized. Further, unlike the conventional method for forming a shell layer of magnesium fluoride by adhering fluorine and magnesium to the surface layer of the core particle and growing the crystal nucleus, in the producing method according to the present aspect, the shell can be formed by directly fluorinating the surface layer of the magnesium inorganic salt to be the core particle. Therefore, core-shell particle having high shell strength can be obtained.

A method for producing a core-shell particle according to a second aspect of the present invention is the method for producing the core-shell particle according to the first aspect, wherein in the shell formation step, a solution of a fluorinating agent and a magnesium inorganic salt are reacted to form the shell.

As a result of intensive studies by the present inventors, it has been found that the method for producing the core-shell particle according to the present aspect can provide a core-shell particle having a shell layer with a more uniform thickness. In addition, according to the method for producing the core-shell particle according to the present aspect under a wet condition, a core-shell particle having a shell consisting of granular magnesium fluoride on the surface layer of the core particle are obtained, and therefore, a core-shell particle having a shape different from that of particles obtained by a producing method under a dry condition described later are obtained. Therefore, a core-shell particle having different shapes can be selectively produced by changing the conditions of the fluorination step.

A method for producing a core-shell particle according to a third aspect of the present invention is the method for producing the core-shell particle according to the first aspect, wherein in the shell formation step, a gaseous fluorinating agent and a magnesium inorganic salt are reacted to form the shell.

As a result of intensive studies by the present inventors, according to the method for producing the core-shell particle according to the present aspect, a core-shell particle can be obtained by forming a shell layer consisting of magnesium fluoride even on the surface layer of a small core particle having a particle size of 1 µm or less. As a result, a core-shell particle having a small particle diameter can be obtained. Further, according to the method for producing core-shell particles of the present aspect under a dry condition, a core-shell particle having a shell consisting of extremely fine needle-like magnesium fluoride on the surface layer of the core particle can be obtained. Therefore, it is possible to selectively obtain a core-shell particle having a shape different from that of the particle obtained by the above-described producing method under the wet condition.

A method for producing a core-shell particle according to a fourth aspect of the present invention is the method for producing the core-shell particle according to the first aspect, wherein in the shell formation step, the shell is formed by reacting a magnesium inorganic salt with hydrogen fluoride generated by heating a solid fluorinating agent to a decomposition temperature.

As a result of intensive studies by the present inventors, according to the method for producing the core-shell particle according to the present aspect, the decomposition reactivity of the fluorinating agent is increased, and the efficiency of fluorination of the surface layer of the magnesium inorganic salt to be the core particle is improved. The use of solid particle having a small particle diameter as the fluorinating agent further improves the efficiency of fluorination of the magnesium inorganic salt surface layer. Therefore, according to the method for producing the core-shell particle of the present aspect, a shell layer consisting of magnesium fluoride can be formed on the surface layer of the core particle with a smaller amount of fluorinating agent than in the liquid phase process or the gas phase process. Therefore, the method for producing the core-shell particle according to the present aspect has high cost performance. In addition, in the method for producing the core-shell particle according to the present aspect, a step of separation from the liquid phase is not required, and anhydrous hydrogen fluoride gas is not directly handled. From this, it can be said that the method for producing the core-shell particle according to the present aspect is a producing method having high handleability and high industrial practicality.

A method for producing a core-shell particle according to a fifth aspect of the present invention is the method for producing the core-shell particle according to any one of the second to fourth aspects, in which the fluorinating agent is at least one fluorinating agent selected from the group consisting of hydrogen fluoride, hydrofluoric acid, ammonium fluoride, and ammonium hydrogen fluoride.

By directly fluorinating the surface layer of the magnesium inorganic salt as the core particle using the fluorinating agent, a core-shell particle having a shell layer with high strength can be obtained. Specifically, as the fluorinating agent according to the second aspect of the present invention, hydrofluoric acid, an aqueous solution of ammonium fluoride, a mixed solution of hydrogen fluoride dissolved in ethanol, or the like is used, and hydrofluoric acid is particularly preferably used. As the fluorinating agent according to the third aspect of the present invention, hydrogen fluoride, ammonium fluoride, ammonium hydrogen fluoride, or the like is used, and hydrogen fluoride is particularly preferably used. Finally, as the fluorinating agent according to the fourth aspect of the present invention, sodium hydrogen fluoride, potassium hydrogen fluoride, ammonium fluoride, ammonium hydrogen fluoride, and the like are used, and particularly, ammonium fluoride or ammonium hydrogen fluoride is preferably used.

A method for producing a core-shell particle according to a sixth aspect of the present invention is the method for producing the core-shell particle according to any one of the first to fifth aspects, in which the magnesium inorganic salt is at least one magnesium inorganic salt selected from the group consisting of magnesium acetate, magnesium chloride, magnesium oxide, magnesium hydroxide, and magnesium carbonate.

By using the magnesium inorganic salt as the core particle, the core-shell particle can be produced without the need for synthesis of the core particle from the beginning. Among these, magnesium oxide, magnesium hydroxide, and magnesium carbonate are more suitable for fluorinating the surface layer, and are preferably used as the core particles. The particle diameter and shape of the core-shell particle or the hollow particle of the fluoride obtained by the producing method according to the present invention are in accordance with the particle diameter and shape of the magnesium inorganic salt to be the core particle. Therefore, by controlling the particle diameter and shape of the magnesium inorganic salt used as the core particle, the particle diameter and shape of the core-shell particle or the hollow particle of the fluoride obtained therefrom can be controlled.

A core-shell particle according to a seventh aspect of the present invention includes a core particle and a shell. The core particle consists of a magnesium inorganic salt. The shell is formed on the surface layer of the core particle. The shell consists of a magnesium fluoride. The core-shell particle is obtained by the method for producing a core-shell particle according to any one aspect of the first aspect to the sixth aspect.

Therefore, a hollow particle of a fluoride obtained from the core-shell particle according to the present aspect has a shell layer having high strength. The core-shell particle according to the present aspect has high heat resistance, and can contribute to the invention of a novel material in which high-temperature or the like is less likely to occur.

A method for producing a hollow particle of a fluoride according to the eighth aspect of the present invention includes a removal step. In the removal step, a core particle is removed with an acid from a core-shell particle having the core particle consisting of a magnesium inorganic salt and the shell consisting of magnesium fluoride and formed on the surface layer of the core particle.

Therefore, in the hollowing step for removing only the core particle from the core-shell particle, a hollow particle of a fluoride can be obtained without requiring thermal energy.

A method for producing a hollow particle of a fluoride according to a ninth aspect of the present invention is the method for producing the hollow particle of the fluoride according to the eighth aspect, in which the acid is at least one acid selected from the group consisting of hydrochloric acid, nitric acid, and sulfuric acid.

Therefore, the elution time of the core particle can be controlled by adjusting the concentration of hydrochloric acid, nitric acid, or sulfuric acid used for removing the core particles.

### EFFECTS OF THE INVENTION

According to the present invention, the synthesis step of a particle to be a core of a core-shell particle, the surface charge adjustment step for forming a shell layer consisting of magnesium fluoride on the surface layer of the core particle, and the removal step of the core particle of the core-shell particle using thermal energy, which are essential in the conventional method, are not required. Furthermore, according to the present invention, it is possible to produce a core-shell particle having a strong shell layer consisting of magnesium fluoride and a desired particle size or shape, and a hollow fluoride particle.

### BRIEF DESCRIPTION OF THE DRAWINGS

[FIG. 1] A scanning electron micrograph of the core-shell particles produced in WORKING EXAMPLE 1.
[FIG. 2] A scanning electron micrograph of the core-shell particles produced in WORKING EXAMPLE 2.
[FIG. 3] A scanning electron micrograph of the core-shell particles produced in WORKING EXAMPLE 3.
[FIG. 4] A transmission electron micrograph of the hollow particles produced in WORKING EXAMPLE 1.
[FIG. 5] A transmission electron micrograph of the hollow particles produced in WORKING EXAMPLE 2.
[FIG. 6] A transmission electron micrograph of the hollow particles produced in WORKING EXAMPLE 3.

### DETAILED DESCRIPTION OF THE INVENTION

The method for producing a hollow particle according to the embodiment of the present invention includes (1) a step of forming a shell on the surface layer of a core particle by a liquid phase method (wet method) or a gas phase method or a solid phase method (dry method), and (2) a step of removing the core particle with an acid. These steps will be described in detail below.

### <Shell Formation Step>

In this step, a shell layer is formed on the surface layer of the core particle by reacting a fluorinating agent with a magnesium inorganic salt to be the core particle. Thus, a core-shell particle having a core of a magnesium inorganic salt and a shell of magnesium fluoride can be produced.

The magnesium inorganic salt may be at least one magnesium inorganic salt selected from the group consisting of magnesium acetate, magnesium chloride, magnesium oxide, magnesium hydroxide, and magnesium carbonate. Among these, magnesium oxide, magnesium hydroxide, and magnesium carbonate are more suitable for fluorinating the surface layer, and are preferably used as the material of the core particle.

The particle size of the magnesium inorganic salt used as the core particle is preferably in the range of 50 nm or more and 5 µm or less, and it is particularly preferable to use a particle size in the range of 50 nm or more and 100 nm or less from the viewpoint of realizing a low refractivity when the purpose is to form an antireflection film.

The fluorinating agent may be at least one fluorinating agent selected from the group consisting of hydrogen fluoride, hydrofluoric acid, ammonium fluoride, and ammonium hydrogen fluoride.

Examples of the method for reacting the fluorinating agent with the core particle include (a) a method of adding the magnesium inorganic salt to a solution of the fluorinating agent dissolved in a solvent to react them (liquid phase method), (b) a method of passing a vaporized fluorinating agent or a mixed gas that a fluorinating agent is diluted with an inert gas such as nitrogen gas through a space for placing the magnesium inorganic salt to contact and react with the magnesium inorganic salt (gas phase method), and (c) a method of mixing the fluorinating agent and the magnesium inorganic salt in a solid state and heating them to the decomposition temperature of the fluorinating agent to react them (solid phase method). However, in the embodiment of the present invention, the method for reacting the fluorinating agent with the core particles is not limited to the above-described method as long as the method can fluorinate the surface layer of the magnesium inorganic salt.

Examples of the fluorinating agent used in the liquid phase method include hydrofluoric acid, an aqueous solution of ammonium fluoride, and a solution of hydrogen fluoride dissolved in ethanol or the like. In particular, hydrofluoric acid is preferably used. The concentration of hydrofluoric acid is preferably adjusted to 1 to 10 mass%. The temperature during the reaction is preferably in the range of 25 °C or more and 50 °C or less from the viewpoint of suppressing the particle growth of the fluoride to be produced.

The fluorinating agent used in the vapor phase method may be at least one fluorinating agent selected from the group consisting of hydrogen fluoride, ammonium fluoride, and ammonium hydrogen fluoride. In particular,, anhydrous hydrogen fluoride gas is preferably used. When the vaporized fluorinating agent is passed through the reaction vessel in which the magnesium inorganic salt has been collected, the gas obtained by vaporizing the fluorinating agent may be diluted with an inert gas such as nitrogen gas and then passed through the reaction vessel. The temperature during the reaction is preferably in the range of the condensation point of hydrogen fluoride or more and 300 °C or less from the viewpoint of suppressing the condensation of hydrogen fluoride gas. The temperature at the time of the reaction in the case of ammonium fluoride and ammonium hydrogen fluoride may be not lower than the boiling point of these fluorinating agents, and specifically, it is preferably not lower than 240 °C under normal pressure.

The fluorinating agent used in the solid phase method may be at least one fluorinating agent selected from the group consisting of ammonium fluoride and ammonium hydrogen fluoride. The reaction is preferably carried out at a temperature equal to or higher than the decomposition temperature of ammonium fluoride or ammonium hydrogen fluoride. Specifically, the temperature is preferably 100 °C or higher for ammonium fluoride and 240 °C or higher for ammonium hydrogen fluoride under normal pressure.

The surface of the core-shell particle having unevenness on the surface thereof obtained by fluorination in the shell formation step of each of the liquid phase method, the gas phase method and the solid phase method can be smoothed by performing a heat treatment at a temperature in the range of 600 °C or more and 800 °C or less. In particular, in order to smooth the surface of the core-shell particle having unevenness on the surface, the heating treatment is preferably performed at about 800 °C.

### <Step of Removing Core Particles with Acid>

In this step, a hollow particle can be produced from the core-shell particle obtained in the shell formation step by dissolving the magnesium inorganic salt as the core portion with an acid.

The acid for dissolving the magnesium inorganic salt as the core portion may be at least one acid selected from the group consisting of hydrochloric acid, nitric acid and sulfuric acid. In particular, hydrochloric acid is preferably used.

The concentration of the acid to be used for removing the core is preferably 0.5 to 2 M. By using an acid in this concentration range, only the core portion can be selectively dissolved. Further, the amount of liquid to be treated in solid-liquid separation after dissolution of the core portion is reduced, which is economical.

The temperature at the time of dissolution is preferably room temperature. The concentration of the suspension when eluting the core portion is preferably 1 to 4 mass%.

### (WORKING EXAMPLES)

The present invention will be described in more detail below by way of working examples. However, the present invention is not limited to the working examples shown below.

### WORKING EXAMPLE 1

### 1. Preparation of Core-Shell Particles by Fluorination of Surface Layer of Magnesium Oxide Core Particles by Liquid Phase Method (Wet Method)

50 mass% hydrofluoric acid was collected in a 500 mL fluorine resin vessel, and diluted with water to a concentration of 5 mass% to prepare a 250.8g of 5 mass% hydrofluoric acid. Next, 8.1 g of magnesium oxide (SMO-5, manufactured by Sakai Chemical Industry Co., Ltd., particle size: about 5 µm) was added to the prepared 5 mass% hydrofluoric acid, and the mixture was stirred at room temperature for 2 hours. The obtained suspension was subjected to sedimentation separation by centrifugation (2500 rpm, 10 minutes), and the supernatant was removed. Subsequently, 40 mL of water was added to the sediment obtained by removing the supernatant, and again separated by centrifugation (2500 rpm, 10 minutes), and the supernatant was removed. Thereafter, the sediment was dried at 120 °C for 3 hours to obtain 9. 9 g of white powder.

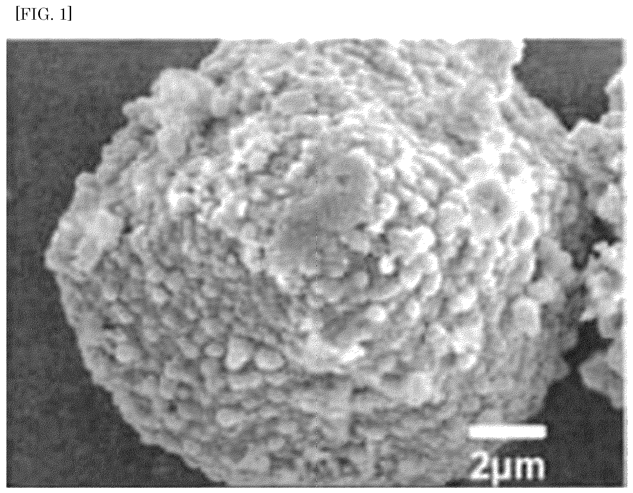

The white powder obtained above was observed with a scanning type electron microscope (JSM-IT200, manufactured by JEOL Ltd.), and it was confirmed that fine granular particles were adhered to the surface layer of particles having a particle size of about 5 µm (FIG. 1). As a result of elemental analysis of the white powder, the composition of the powder contained oxygen, magnesium, and fluorine. From this, it was confirmed that core-shell particles having magnesium oxide as core particles and a shell made of magnesium fluoride on the surface layer thereof were produced.

### 2. Preparation of Hollow Particles by Removal of Core Particles

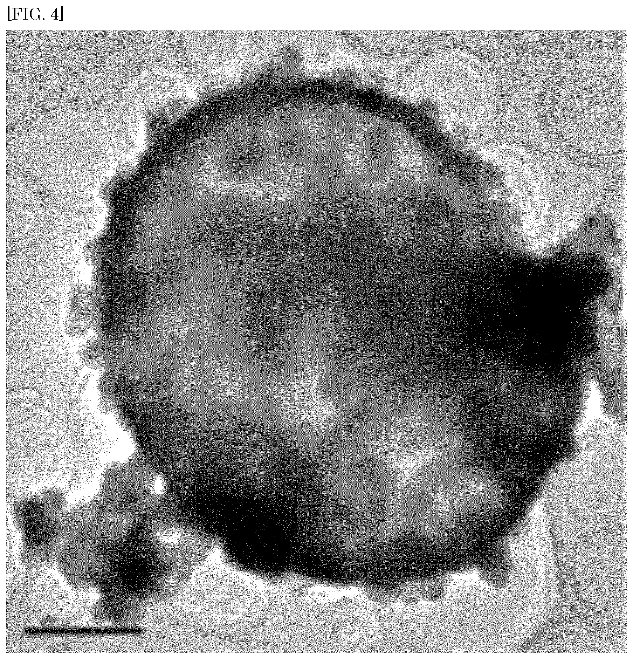

To 0.1 g of the core-shell particles obtained above, 10 mL of 2 M hydrochloride aqueous solution was added, and the mixture was allowed to stand for 2 hours. Thereafter, the supernatant was removed, and 1mL of methanol was added to the residue to obtain dispersion. A TEM grid for observation was immersed in the dispersion obtained above, and then the grid was dried under reduced pressure at room temperature overnight in a desiccator to obtain an observation sample. The observation sample obtained above was observed with a transmission type electron microscope (JEM-2010-K, manufactured by JEOL Ltd.), and hollow particles having a particle size of about 5 µm and a shell thickness of about 500 nm were observed (FIG. 4). Elemental analysis by energy dispersive X-ray spectrometry (EDS) with a scanning type electron microscope (JSM-IT200, manufactured by JEOL Ltd.) revealed that the composition of the hollow particles contained magnesium and fluoride, and no oxygen was detected. From this, it was confirmed that magnesium oxide as the core particles was removed.

### WORKING EXAMPLE 2

### 1. Preparation of Core-Shell Particles by Fluorination of Surface Layer of Magnesium Oxide Core Particles by Gas Phase Method (Dry Method)

40.1 g of Magnesium oxide (SMO-1, manufactured by Sakai Chemical Industries Co., Ltd., particle diameter: about 1 µm) was collected in a 1 L fluorine resin vessel, and the reactor was rotated at a 20 rpm speed to stir the magnesium oxide in the reactor. Subsequently, another 1 L fluorine resin vessel was prepared as a hydrogen-fluoride-gas generating vessel, and 60.1 g of hydrogen fluoride in liquid (2.9 times the equivalence of magnesium oxide) was collected therein. Then, the hydrogen-fluoride-gas generating vessel was heated to 24 °C in a water bath to generate hydrogen fluoride gas. The mixture gas obtained by diluting the hydrogen fluoride gas generated above with nitrogen at a flow rate of 1 L/min was passed through the vessel to react the magnesium oxide with the hydrogen fluoride gas at room temperature for 3 hours. Thereafter, the reaction product obtained above was dried at 120 °C for 5 hours to obtain a 45. 3 g of white powder.

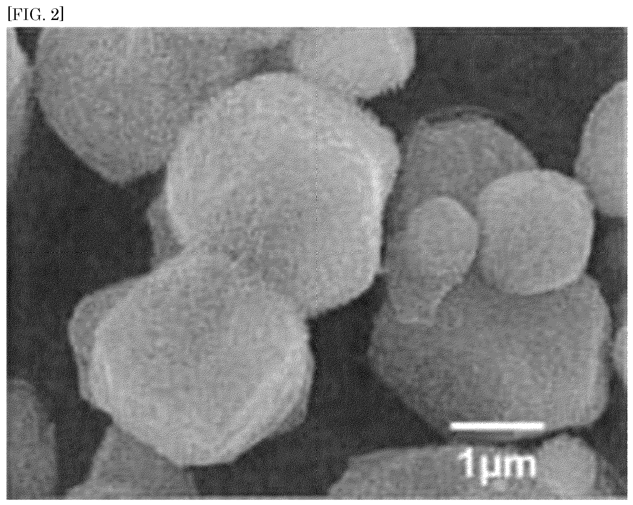

The white powder obtained above was observed with a scanning type electron microscope (JSM-IT200, manufactured by JEOL Ltd.), and it was confirmed that fine needle-like particles were attached to the surface layer of particles having a particle size of about 1 µm (FIG. 2). As a result of elemental analysis of the white powder, the composition of the powder contained oxygen, magnesium, and fluorine. From this, it was confirmed that core-shell particles having magnesium oxide as core particles and a shell consisting of magnesium fluoride on the surface layer thereof were produced.

### 2. Preparation of Hollow Particles by Removal of Core Particles

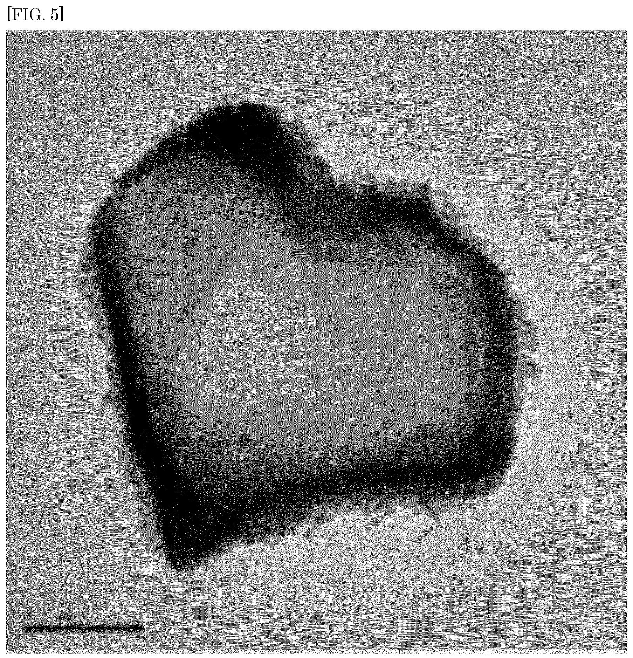

To 1 g of the core-shell particles obtained above, 48 mL of 2 M hydrochloric aqueous solution was added, and the mixture was allowed to stand for 24 hours. Thereafter, the sediment obtained above was separated by centrifugation (2500 rpm, 10 minutes), and the supernatant was removed. Thereafter, 40 mL of water was added to the residue obtained by removing the supernatant and it was again separated by centrifugation (2500 rpm, 10 minutes), and the supernatant was removed. This operation was repeated twice, and then the product was dried at 120 °C for 3 hours to obtain 0.19 g of white powder. The white powder was collected in 0.1 g, and 1 mL of methanol was added thereto to obtain dispersion. A TEM grid for observation was immersed in the dispersion obtained above, and then the grid was dried under reduced pressure at room temperature overnight in a desiccator to obtain an observation sample. The observation sample obtained above was observed with a transmission type electron microscope (JEM-2010-K, manufactured by JEOL Ltd.), and hollow particles having a particle size of about 1 µm and a shell thickness of 200 nm were observed (FIG. 5). Elemental analysis by energy dispersive X-ray spectrometry (EDS) with a scanning type electron microscope (JSM-IT200, manufactured by JEOL Ltd.) revealed that the composition of the hollow particles contained magnesium and fluoride, and no oxygen was detected. From this, it was confirmed that magnesium oxide as the core particles was removed. WORKING EXAMPLE 3

### 1. Preparation of Core-Shell Particles by Fluorination of Surface Layer of Magnesium Hydroxide Core Particles by Gas Phase Method (Dry Method)

11.4 g of magnesium hydroxide (manufactured by Fuji Film-Wako Pure Chemical Industries, Ltd., particle diameter: about 0.07 µm) was collected in a fluorine resin vessel, and the vessel was rotated at a speed of 20 rpm to stir the magnesium hydroxide in the vessel. Subsequently, another 1 L fluorine resin vessel was prepared as a hydrogen-fluoride-gas generating vessel, and 8.7 g of hydrogen fluoride in liquid (2.2 times the equivalence of magnesium oxide) was collected therein. Then, the hydrogen-fluoride-gas generating vessel was heated to 24 °C in a water bath to generate hydrogen fluoride gas. The mixture gas obtained by diluting the hydrogen fluoride gas generated above with nitrogen at a flow rate of 2 L/min was passed through the vessel, and the vessel was heated in an oil bath at 110 °C for 1.5 hours to react the magnesium hydroxide with the hydrogen fluoride gas. Thereafter, the reaction product obtained above was dried at 120 °C for 5 hours to obtain a 10. 3 g of white powder.

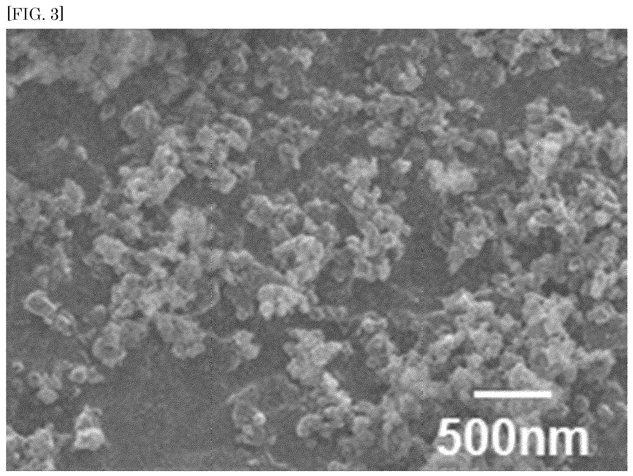

The white powder obtained above was observed with a scanning type electron microscope (JSM-IT200, manufactured by JEOL Ltd.) , and particles having a particle size of about 100nm were confirmed (FIG. 3). As a result of elemental analysis of the white powder, the composition of the powder contained oxygen, magnesium, and fluorine. From this, it was confirmed that core-shell particles having magnesium oxide as core particles and a shell consisting of magnesium fluoride on the surface layer thereof were produced.

### 2. Preparation of Hollow Particles by Removal of Core Particles

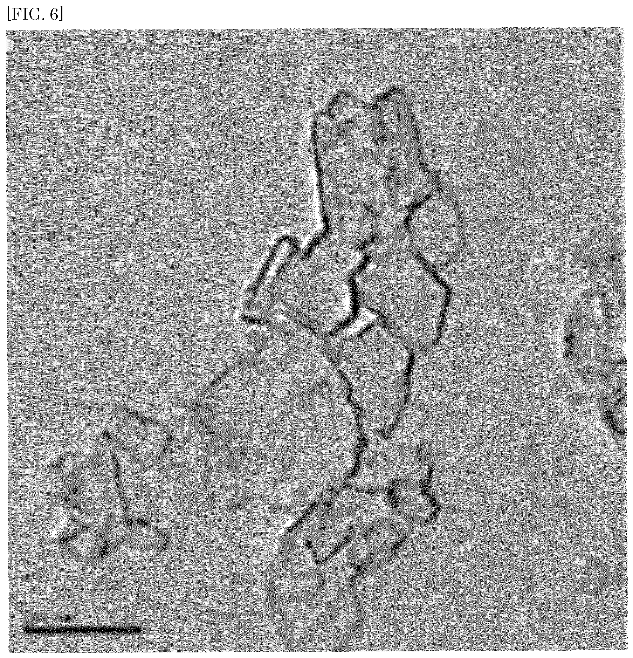

To 5.0 g of the core-shell particles obtained above, 200 mL of 0. 5 M hydrochloric aqueous solution was added, and the mixture was allowed to stand for 24 hours. Thereafter, the sediment obtained above was separated by centrifugation (2500 rpm, 10 minutes), and the supernatant was removed. This operation was repeated twice, and then the product was dried at 120 °C for 3 hours to obtain a white powder 1.58 g. The white powder was collected in 0.1 g, 1 mL of methanol was added thereto to obtain dispersion. A TEM grid for observation was immersed in the dispersion obtained above, and then the grid was dried under reduced pressure at room temperature overnight in a desiccator to obtain an observation sample. The observation sample obtained above was observed with a transmission type electron microscope (JEM-2010-K, manufactured by JEOL Ltd.), and hollow particles having a particle size of about 100 nm and a shell thickness of about 20 nm were observed (FIG. 6). Elemental analysis by energy dispersive X-ray spectrometry (EDS) with a scanning type electron microscope (JSM-IT200, manufactured by JEOL Ltd.) revealed that the composition of the white powder contained magnesium and fluoride, and no oxygen was detected. From this, it was confirmed that magnesium oxide as the core particles was removed.

## Claims

1. A method for producing a core-shell particle, comprising a shell formation step for forming a shell consisting of magnesium fluoride on the surface layer of a core particle consisting of a magnesium inorganic salt.

2. The method for producing the core-shell particle according to claim 1, wherein in the shell formation step, the shell is formed by reacting a solution of a fluorinating agent with the magnesium inorganic salt.

3. The method for producing the core-shell particle according to claim 1, wherein in the shell formation step, the shell is formed by reacting a gaseous fluorinating agent with the magnesium inorganic salt.

4. The method for producing the core-shell particle according to claim 1, wherein in the shell formation step, the shell is formed by heating a solid mixture containing a fluorinating agent and the magnesium inorganic salt to a decomposition temperature of the fluorinating agent.

5. The method for producing the core-shell particle according to any one of claims 2 through 4, wherein the fluorinating agent is at least one fluorinating agent selected from the group consisting of hydrogen fluoride, hydrofluoric acid, ammonium fluoride, and ammonium hydrogen fluoride.

6. The method for producing the core-shell particle according to any one of claims 1 through 4, wherein the magnesium inorganic salt is at least one magnesium inorganic salt selected from the group consisting of magnesium oxide and magnesium hydroxide.

7. A core-shell particle comprising:
a core particle consisting of a magnesium inorganic salt; a shell formed of magnesium fluoride and formed on a surface layer of the core particle.

8. A method for producing a hollow particle, comprising a removal step for removing a core particle with an acid from a core-shell particle having the core particle consisting of a magnesium inorganic salt, and a shell formed of magnesium fluoride and formed on a surface layer of the core particle.

9. The method for producing the hollow particle according to claim 8, wherein the acid is at least one acid selected from the group consisting of hydrochloric acid, nitric acid, and sulfuric acid.
